# EUROPÄISCHE PATENTSCHRIFT

(11) **EP 0 347 655 B1**
(45) Veröffentlichungstag und Bekanntmachung des Hinweises auf die Patenterteilung: **11.08.1993**
(21) Anmeldenummer: 89110343.4
(22) Anmeldetag: 08.06.1989
(51) Int. Cl.: C04B 28/06, C04B 28/14, C04B 7/32, C04B 11/28

(54) **Verfahren zur Herstellung eines nach dem Anmachen mit Wasser schnellerstarrenden hydraulischen Bindemittels**
Method of making a rapidly hardening hydraulic binder upon mixing with water
Procédé de fabrication d'un liant hydraulique ayant une prise rapide après gachage à l'eau

(30) Priorität: 24.06.1988 DE 3821277; 23.12.1988 DE 3843625
(43) Veröffentlichungstag der Anmeldung: 27.12.1989
(73) Patentinhaber: ProMineral Gesellschaft zur Verwendung von Mineralstoffen mbH, 45141 Essen (DE); SICOWA Verfahrenstechnik für Baustoffe GmbH & Co. KG, D-52072 Aachen (DE)
(72) Erfinder: Koslowski, Thomas, Dr., D-5100 Aachen (DE); Ludwig, Udo, Prof. Dr., D-5100 Aachen (DE); Fröhlich, Alexander, Dr., D-5100 Aachen (DE)
(74) Vertreter: Masch, Karl Gerhard, Dr.

(56) Entgegenhaltungen:
- DE-A- 3 049 003
- DE-A- 3 318 364
- DE-C- 3 701 717
- FR-A- 776 536

## Beschreibung

Die Erfindung bezieht sich allgemein auf die Verwendung von Calciumsulfat-Alphahalbhydrat als Bestandteil eines nach dem Anmachen mit Wasser mit hoher Frühfestigkeit schnellerstarrenden wasserfesten hydraulischen Bindemittels, wobei das Calciumsulfat-Alphahalbhydrat vorzugsweise als Hauptbestandteil, jedenfalls als wesentlicher Bestandteil für die Einstellung der Frühfestigkeit und der Erstarrungsgeschwindigkeit wirkt. Wasserfest meint, daß die aus dem angemachten Bindemittel erstarrte und erhärtete Masse langzeitig wasserfest ist. Es versteht sich, daß ein solches Bindemittel stets aus feingemahlenen Bestandteilen besteht und mit einer ausreichenden Wassermenge angemacht wird.

Bei dem bekannten Verfahren, von dem die Erfindung ausgeht (Bauakademie der DDR, Bauinformation, Literaturzusammenstellung Nr. 7/24/83, Titel 4., Gordasevski u.a.) werden das Calciumsulfat-Alphahalbhydrat und Portlandzement gemischt sowie Puzzolane entsprechend dem CaO-Gehalt beigegeben. Versuche haben ergeben, daß die Wasserfestigkeit einer erhärteten Mischung aus diesem hauptsächlich aus den angegebenen drei Komponenten bestehenden Bindemittel bei der Herstellung des Bindemittels nicht ausreichend genau sowie dem jeweiligen Verwendungszweck angepaßt und reproduzierbar eingestellt werden kann.

Um Calciumsulfat-Alphahalbhydrat als nach dem Anmachen mit Wasser schnellerstarrendes wasserfestes Bindemittel einzusetzen, ist es in der Praxis bekannt, Hydrophobierungsmittel oder Paraffine als Hilfsstoffe beizumischen. Hier läßt sich zwar die Wasserfestigkeit auf vorgebbare Werte einstellen, die erreichte Wirkung ist jedoch nur kurzfristig und die Hilfsmittel sind für die großtechnische Anwendung zu teuer.

Der Erfindung liegt die Aufgabe zugrunde, ein Verfahren anzugeben, welches es erlaubt, bei Verwendung von Calciumsulfat-Alphahalbhydrat als wesentlicher Bestandteil oder Hauptbestandteil im Sinne der einleitenden Ausführungen ein schnellerstarrendes hydraulisches Bindemittel mit definierter Wasserfestigkeit der erhärteten Masse herzustellen.

Zur Lösung dieser Aufgabe ist Gegenstand der Erfindung das Verfahren zur Herstellung eines nach dem Anmachen mit Wasser schnellerstarrenden hydraulischen Bindemittels mit definierter Wasserfestigkeit der daraus hergestellten erhärteten Masse, bei dem als schnellerstarrende Komponente Calciumsulfat-Alphahalbhydrat in einer vorgegebenen Ausgangsmenge eingesetzt wird, dessen erhärtete Masse eine zeitabhängige Wasserfestigkeitskurve aufweist, die, ausgehend von einem hohen Frühfestigkeitswert der Schnellerstarrung, in den ersten achtundzwanzig Tagen eine negative Steigung besitzt, bei dem dem Calciumsulfat-Alphahalbhydrat Hüttensand beigemischt wird und bei dem die Menge an Hüttensand auf die Ausgangsmenge an Calciumsulfat-Alphahalbhydrat so abgestimmt wird, daß im Anschluß an die Schnellerstarrung die Bildung von kristallinem Ettringit und von Calciumhydrosilikatphasen eintritt und die zeitabhängige Wasserfestigkeitskurve der erstarrten Mischung in den ersten achtundzwanzig Tagen überall eine positive Steigung aufweist. Kristalline Ettringitbildung erfolgt bei Kalkunterschuß in der angemachten Bindemittelmischung. Wasserfestigkeitskurve bezeichnet die Festigkeitsentwicklung mit der Zeit, gemessen z. B. als Druckfestigkeit in N/mm², bei Lagerung eines entsprechenden Probekörpers unter Wasser. Es versteht sich, daß das Calciumsulfat-Alphahalbhydrat und der Hüttensand fein gemahlen sind. Insbes. können das Calciumsulfat-Alphahalbhydrat und der Hüttensand gemeinsam gemahlen und dabei gemischt werden. Man kann aber auch die pulverförmigen Komponenten mischen. Nach bevorzugter Ausführungsform der Erfindung wird mit einem Calciumsulfat-Alphahalbhydrat gearbeitet, welches aus dem Entschwefelungsgips einer naßarbeitenden Rauchgasentschwefelungsanlage gewonnen wurde und chloridische Bestandteile in Form von Calciumchlorid u. a. aufweist. Nach bevorzugter Ausführungsform der Erfindung wird fernerhin mit einem Hüttensand gearbeitet, der einen Al₂O₃-Gehalt von mindestens 13 % besitzt und bei dem das Verhältnis (CaO + MgO + Al₂O₃)/SiO₂ mindestens 1,6 beträgt. Um die Festigkeit der erhärteten Masse zu erhöhen, können die genannten chloridischen Bestandteile davon auch beigegeben werden, und zwar vorzugsweise bis zu einer Menge von 0,2 bis 3 Masse%, bezogen auf die Gesamtmenge der Mischung. Dabei kann auch mit Natriumchlorid gearbeitet werden. Wird mit Calciumsulfat-Alphahalbhydrat gearbeitet, welches aus dem Entschwefelungsgips einer naßarbeitenden Rauchgasentschwefelungsanlage gewonnen wurde, so ist die Beigabe von chloridischen Bestandteilen im allgemeinen nicht erforderlich. Im Rahmen der Erfindung liegt es fernerhin, Eisensulfat beizumischen, und zwar vorzugsweise ebenfalls bis zu einer Menge von 0,2 bis 3 Masse%, bezogen auf die Gesamtmenge. Das Eisensulfat bewirkt eine Stabilisierung großer länglich ausgebildeter Ettringitkristalle und verhindert dadurch eine reaktionsvermindernde Belegung des Hüttensandkornes. Es versteht sich, daß man auch im Rahmen der Erfindung bekannte Beschleuniger auf Basis von Alkalihydroxiden, Alkalicarbonaten, Alkalisulfaten (oder Mischungen davon) beimischen kann. Ebenso können auch bekannte Verzögerer, z. B. Zitronensäuremonohydrat, beigemischt werden Aber auch weitere Zusatzmittel können beigegeben werden. Als Beispiel werden insoweit Fließmittel, Verflüssiger, Verdicker, Klebe- und Dispergiermittel genannt.

Grundsätzlich ist es bekannt, zur Herstellung eines hydraulischen Bindemittels Gips, auch in Form eines Hemihydrates oder Anhydrit, und Hüttensand zu mischen (DIN 4210, DE 30 49 003). Hier wird jedoch mit alkalischer Anregung des Hüttensandes gearbeitet, z. B. durch beigabe von gemahlenen Zementklinkern oder Portlandzement. Die Wasserfestigkeit der erhärteten Mischung ist unterschiedlich. Eine Regel zur definierten Einstellung der Wasserfestigkeit über einen weiten Mischungsbereich ist dabei nicht entwickelt worden.

Bei dem nach dem erfindungsgemäßen Verfahren hergestellten Bindemittel stellt das Calciumsulfat-Alphahalbhydrat die Schnellerstarrungskomponente dar, der Hüttensand ist demgegenüber die im Langzeitbereich reagierende latent hydraulische Komponente. Das aus dem Calciumsulfat-Alphahalbhydrat bei der Erstarrung entstehende Dihydrat funktioniert als sulfatischer Anreger für den Hüttensand. Das nach der Lehre der Erfindung hergestellte, angemachte Bindemittel führt zu einer Früherstarrung durch die Reaktion des Calciumsulfat-Alphahalbhydrates und bei anschließender Klima- bzw. Wasserlagerung zu großer Festigkeit aufgrund der Hüttensandreaktion. Die Festigkeit steigt zunächst während der Ettringitbildung und der Bildung von Calciumhydrosilikatphasen einige Tage steil an und flacht dann im Anschluß ab. Dabei reagiert der Hüttensand bei sulfatischer Anregung mit Wasser zu Calciumhydrosilikat festigkeitsfördernd weiter. Eine wesentliche Temperaturempfindlichkeit ist nicht zu beobachten. Bei niedrigen Temperaturen reagiert das Calciumsulfat-Alphahalbhydrat, bei höheren Temperaturen (etwa gleich oder größer der Zimmertemperatur) reagieren beide Bestandteile. Das erfindungsgemäß hergestellte Bindemittel liefert so eine extrem hohe Frühfestigkeit, es zeichnet sich sowohl durch Wasserfestigkeit als auch Sulfatbeständigkeit aus und ist temperaturunempfindlich sowie schwindarm. Die einstellbare Frühfestigkeit ist sehr hoch, die Endfestigkeit wird insbes. durch den Anteil an Hüttensand bestimmt und stets kann das Bindemittel nach der Lehre der Erfindung so eingestellt werden, daß es eine hohe Wasserfestigkeit aufweist, die unterschiedlichen Anwendungen anpaßbar ist. Durch das Mischungsverhältnis läßt sich die Kurve der Wasserfestigkeit einstellen. Sie kann damit auch unterschiedlichen Anwendungszwecken angepaßt werden. Nach bevorzugter Ausführungsform der Erfindung wird die Menge an Hüttensand so gewählt, daß die die Steigung angebende erste Ableitung der Wasserfestigkeitskurve nach der Zeit, in dem an die Bildung von Calciumsulfat-Dihydrat anschließenden Kurvenabschnitt bis zum Erreichen der Endfestigkeit, im Bereich zwischen 0 und 1,6 liegt. Arbeitet man in diesem Bereich, so erhält man besonders definierte, stabile Werte für die Wasserfestigkeit der erhärteten Mischung. Zu hohen Festigkeiten insgesamt kommt man, wenn mit sehr feinen Ausgangskomponenten gearbeitet wird. In diesem Zusammenhang lehrt die Erfindung, daß das Calciumsulfat-Alphahalbhydrat und der Hüttensand zumindest bis auf Zementfeinheit gemahlen werden. Bei einer bevorzugten Ausführungsform der Erfindung werden das Calciumsulfat-Alphahalbhydrat und der Hüttensand auf eine spezifische Oberfläche nach Blaine von zumindest 3000 gemahlen. Bewährt hat sich eine Verfahrensweise, bei der das Calciumsulfat-Alphahalbhydrat in einer Menge von 30 bis 90 Masse%, bezogen auf die Gesamtmischung, eingesetzt wird. Für viele Anwendungsfälle wird man das Calciumsulfat-Alphahalbhydrat sowie den Hüttensand im Verhältnis 50 : 50 einsetzen.

Überraschenderweise führt die Lehre der Erfindung bei sehr unterschiedlichen Ausgangsmengen an Calciumsulfat-Alphahalbhydrat zu einem schnellerstarrenden hydraulischen Bindemittel, dessen erhärtete Masse eine definierte Wasserfestigkeit aufweist. Obgleich die Bildung von Ettringit bei der Herstellung von Mörtel und Beton aus einem hydraulischen Bindemittel als schädlich gilt, ist die Ettringitbildung bei erhärteten Massen aus dem erfindungsgemäßen Bindemittel nicht schädlich, im Gegenteil, die Ettringitbildung trägt wesentlich zur Wasserfestigkeit bei. Während man nach der herrschenden Lehre (vgl. Bauakademie der DDR, Bauinformation, l.c. und DE 30 49 003) bei Einsatz von Hüttensand alkalische Anreger wie Portlandzement oder feingemahlene Zementklinker beigeben muß, ist dieses bei dem erfindungsgemäßen Verfahren nicht erforderlich.

Die erreichten Vorteile sind auch darin zu sehen, daß das nach dem erfindungsgemäßen Verfahren hergestellte Bindemittel sehr vielfältig verwendet werden kann. Möglich sind insbes.
a) die Verwendung des Bindemittels, ggf. mit Zuschlägen und Zusatzmitteln, als sofort oder frühtragender Baustoff für den Untertagebereich, vorzugsweise mit einem Verhältnis von Calciumsulfat-Alphahalbhydrat/Hüttensand von 70:30 bis 95:5, insbes. etwa 90:10,
b) die Verwendung des Bindemittels, ggf. mit Zuschlägen und Zusatzmitteln, zur Gipsplattenherstellung, vorzugsweise mit einem Verhältnis von Calciumsulfat-Alphahalbhydrat/Hüttensand von 80:20 bis 95:5, insbes. etwa 90:10,
c) die Verwendung des Bindemittels, ggf. mit Zuschlägen und Zusatzmitteln als Reparaturmörtel, insbes. Flugplatzreparaturmörtel, vorzugsweise mit einem Verhältnis von Calciumsulfat-Alphahalbhydrat/Hüttensand von 80:20 bis 50:50, insbes. 70:30,
d) die Verwendung des Bindemittels, ggf. mit Zuschlägen und Zusatzmitteln, im Tunnelbau, vorzugsweise mit einem Verhältnis von Calciumsulfat-Alphahalbhydrat/Hüttensand von 60:40 bis 30:70,
e) die Verwendung des Bindemittels, ggf. mit Zuschlägen und Zusatzmitteln, zur Herstellung von selbstnivellierenden Estrichen, vorzugsweise mit einem Verhältnis von Calciumsulfat-Alphahalbhydrat/Hüttensand von 90:10 bis 70:30,
f) die Verwendung des Bindemittels, ggf. mit Zuschlägen und Zusatzmitteln, zur Herstellung von porosierten Wandbaustoffen, vorzugsweise mit einem Verhältnis von Calciumsulfat-Alphahalbhydrat/Hüttensand von 90:10 bis 95:5,
g) die Verwendung des Bindemittels, ggf. mit Zuschlägen und Zusatzmitteln, als Spachtelmasse mit einem Verhältnis von Calciumsulfat-Alphahalbhydrat/Hüttensand von 95:5 bis 30:70,
h) die Verwendung des Bindemittels, ggf. mit Zuschlägen und Zusatzmitteln, als sulfatbeständiger Injektionsmörtel zum Verfestigen brüchiger Baumassen mit einem Verhältnis von Calciumsulfat-Alphahalbhydrat/Hüttensand von 50:50 bis 10:90,
i) die Verwendung des Bindemittels, ggf. mit Zuschlägen und Zusatzmitteln, zur Herstellung von Saugstreu,
j) die Verwendung des Bindemittels, ggf. mit Zuschlägen und Zusatzmitteln, zur Herstellung tragender, porosierter und nicht porosierter Wandbaustoffe.

Aber auch für andere Zwecke kann das erfindungsgemäß hergestellte Bindemittel eingesetzt werden.

Gegenstand der Erfindung sind auch die nach dem erfindungsgemäßen Verfahren hergestellten Bindemittel und die vorstehend aufgeführten Verwendungen.

### Ausführungsbeispiel:

Aus Calciumsulfat-Alphahalbhydrat mit einer Mahlfeinheit von 3.200 cm²/g (innere Oberfläche nach Blaine) und mit einem Rückstand von 1 % auf dem 50 µm-Sieb sowie aus Hüttensand einer Mahlfeinheit von 3.500 cm²/g (nach Blaine) wurden Mörtelmischungen hergestellt, und zwar mit unterschiedlichen Mischungsverhältnissen:
Mischung 1) 95 % Calciumsulfat-Alphahalbhydrat, 5 % Hüttensand,
Mischung 2) 65 % Calciumsulfat-Alphahalbhydrat, 35 % Hüttensand,
Mischung 3) 50 % Calciumsulfat-Alphahalbhydrat, 50 % Hüttensand.

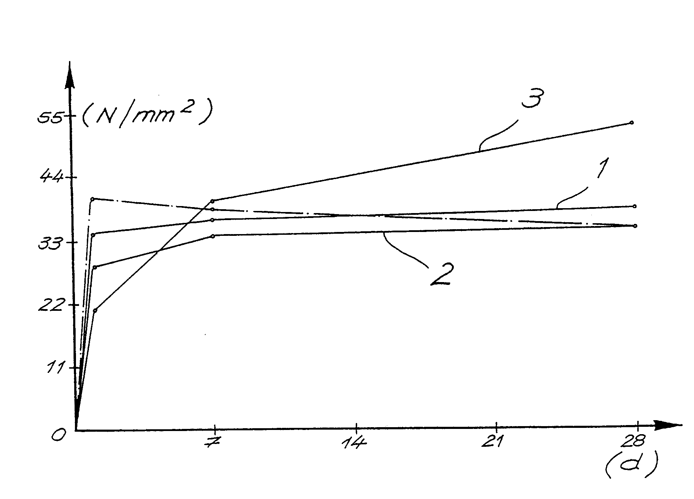

Die Prozentangaben sind in Gewichtsprozent. Den Mischungen wurden 0,02 Gewichtsteile Zitronensäuremonohydrat beigemischt. Die Mischungen wurden mit einem Wasser/Feststoff-Verhältnis von 0,3 zu Pasten angemacht. Die Pasten zeigten die üblichen Frischmörteleigenschaften. Aus den Pasten wurden quaderförmige Prüfkörper der Kantenlänge von 40 mm hergestellt. Diese Prüfkörper wurden nach 20 Minuten entformt und unmittelbar nach dem Entformen unter Wasser gelagert. Zu definierten Zeitpunkten wurde die Druckfestigkeit der einzelnen Prüfkörper in N/mm² gemessen. - Die einzige Figur zeigt die Meßergebnisse.

Auf der Abszissenachse der Figur ist die Zeit der Unterwasserlagerung der Prüfkörper in Tagen aufgetragen, auf der Ordinatenachse die Druckfestigkeit. Die den Mischungen 1), 2) und 3) entsprechenden Kurven wurden mit 1 bzw. 2 bzw. 3 bezeichnet. Strichpunktiert wurde die Kurve für entsprechende Prüfkörper aus Calciumsulfat-Alphahalbhydrat eingezeichnet. Man erkennt, daß diese Prüfkörper aus Calciumsulfat-Alphahalbhydrat eine zeitabhängige Wasserfestigkeitskurve aufweisen, die, ausgehend von dem Endwert der Schnellerstarrung, eine negative Steigung besitzt. Man erkennt, daß bei den Mischungen 1, 2 und 3 die Menge an Hüttensand auf die Ausgangsmenge an Calciumsulfat-Alphahalbhydrat so abgestimmt ist, daß die Wasserfestigkeitskurve eine positive Steigung aufweist. Man kann drei festigkeitsbildende Phasen deutlich unterscheiden: Die erste Phase ist die Schnellerstarrungsphase, in der Calciumsulfat-Alphahalbhydrat zu Calciumsulfat-Dihydrat erstarrt. Das geschieht an einem Tag oder in einigen Tagen. In der zweiten Phase funktioniert das Calciumsulfat-Dihydrat als sulfatischer Anreger für den Hüttensand und die Reaktion läuft mit Wasser im wesentlichen zu Ettringit, und zwar nach der Gleichung

3CaSO₄·2H₂O + 3CaO + Al₂O₃ + 26H₂O→3CaO·Al₂O₃·3CaSO₄·32H₂O.

Das bewirkt einen verhältnismäßig starken Anstieg der Kurve der Druckfestigkeit,der im Beispiel nach etwa sieben Tagen in einen flacheren Anstieg übergeht. In dieser Phase stellt sich die Endfestigkeit ein, und zwar wird die Endfestigkeit durch Calciumhydrosilikatphasen bestimmt. Es versteht sich, daß die zweite Phase und die dritte Phase sich überlappen. Es mag auch schon bei Beginn der Ettringitbildung eine Bildung von Calciumhydrosilikatphasen eintreten. - Es versteht sich, daß die Endfestigkeit des nach dem erfindungsgemäßen Verfahren hergestellten Bindemittels nach achtundzwanzig Tagen nicht abfällt, sondern eher weiter ansteigt.

Durch die Mischungsverhältnisse, die Mahlfeinheit, aber auch durch zementübliche Zusätze, lassen sich die Reaktionsabläufe sowie die erreichten Endfestigkeiten in weiten Bereichen beeinflussen.

## Patentansprüche

1. Verfahren zur Herstellung eines nach dem Anmachen mit Wasser schnellerstarrenden hydraulischen Bindemittels mit definierter Wasserfestigkeit der daraus hergestellten erhärteten Masse mit den folgenden Verfahrensschritten:
1) Als schnellerstarrende Komponente wird pulverförmiges Calciumsulfat-Alphahalbhydrat in einer Ausgangsmenge von 30 bis 90 Masse% von der Gesamtmischung eingesetzt, dessen erhärtende Masse eine zeitabhängige Wasserfestigkeitskurve aufweist, die, ausgehend von einem hohen Frühfestigkeitswert der Schnellerstarrung, in den ersten achtundzwanzig Tagen eine negative Steigung besitzt,
2) dem gemäß Verfahrensschritt 1) ausgewählten Calciumsulfat-Alphahalbhydrat wird Hüttensand beigemischt,
3) die Menge an Hüttensand wird auf die Ausgangsmenge an Calciumsulfat-Alphahalbhydrat so abgestimmt, daß in der abgestimmten Mischung nach Anmachen mit Wasser im Anschluß an die Schnellerstarrung eine Bildung von kristallinem Ettringit und von Calciumhydrosilikatphasen eintritt und die zeitabhängige Wasserfestigkeitskurve der erstarrten Mischung in den ersten achtundzwanzig Tagen überall eine positive Steigung aufweist, die im Bereich zwischen 0 und 1,6 liegt.

2. Verfahren nach Anspruch 1, bei dem das Calciumsulfat-Alphahalbhydrat und der Hüttensand gemeinsam gemahlen und dabei gemischt werden.

3. Verfahren nach einem der Ansprüche 1 oder 2, bei dem mit einem Calciumsulfat-Alphahalbhydrat gearbeitet wird, welches aus dem Entschwefelungsgips einer naßarbeitenden Rauchgasentschwefelungsanlage gewonnen wurde und chloridische Bestandteile aufweist.

4. Verfahren nach einem der Ansprüche 1 bis 3, bei dem mit einem Hüttensand gearbeitet wird, der einen Al₂O₃-Gehalt von mindestens 13 % aufweist, und bei welchem Hüttensand das Verhältnis (CaO + MgO + Al₂O₃)/SiO₂ mindestens 1,6 beträgt.

5. Verfahren nach einem der Ansprüche 1 bis 4, bei dem chloridische Bestandteile beigemischt werden.

6. Verfahren nach Anspruch 5, bei dem die chloridischen Bestandteile in einer Menge von 0,2 bis 3 Masse%, bezogen auf die Gesamtmenge, beigemischt werden.

7. Verfahren nach einem der Ansprüche 1 bis 6, bei dem Eisensulfat beigemischt wird.

8. Verfahren nach Anspruch 7, bei dem das Eisensulfat in einer Menge von 0,2 bis 3 Masse%, bezogen auf die Gesamtmenge, beigemischt wird.

9. Verfahren nach einem der Ansprüche 1 bis 8, bei dem bekannte Beschleuniger auf Basis von Alkalihydroxiden, Alkalicarbonaten, Alkalisulfaten (oder Mischungen davon) beigemischt werden.

10. Verfahren nach einem der Ansprüche 1 bis 9, bei dem ein bekannter Verzögerer, z. B. Zitronensäuremonohydrat, beigemischt wird.

11. Verfahren nach einem der Ansprüche 1 bis 10, bei dem die Menge an Hüttensand so gewählt wird, daß die erste Ableitung der Wasserfestigkeitskurve der erhärteten Mischung nach der Zeit, in dem an die Bildung von Calciumsulfat-Dihydrat anschließenden Kurvenabschnitt bis zum Erreichen der Endfestigkeit, im Bereich zwischen 0 und 1, 6 liegt.

12. Verfahren nach einem der Ansprüche 1 bis 11, bei dem das Calciumsulfat-Alphahalbhydrat und der Hüttensand zumindest auf Zementfeinheit gemahlen werden.

13. Verfahren nach Anspruch 12, bei dem das Calciumsulfat-Alphahalbhydrat und der Hüttensand auf eine spezifische Oberfläche nach Blaine von zumindest 3000 gemahlen wird.

14. Verfahren nach einem der Ansprüche 1 bis 13, bei dem das Calciumsulfat-Alphahalbhydrat in einer Menge von 30 bis 90 Masse%, bezogen auf die Gesamtmischung, eingesetzt wird.

15. Bindemittelmischung, die nach einem oder mehreren der Verfahrensansprüche 1 bis 14 hergestellt worden ist.

## Claims

1. A process for manufacturing a hydraulic binder which sets rapidly after mixing with water, the mass produced therefrom having a definite hygroscopic stability, with the following process steps:
1) pulverulent calcium sulphate alpha-hemihydrate is used as the rapid-setting component, in an initial amount of 30 to 90 weight % of the total mixture, the hardening mass of which exhibits a time-dependent hygroscopic stability curve, which, starting from a high early strength value for the rapid setting, has a negative gradient within the first twenty-eight days,
2) foundry sand is admixed with the calcium sulphate alpha-hemihydrate selected according to process step 1),
3) the amount of foundry sand is matched to the initial amount of calcium sulphate alpha-hemihydrate so that the formation of crystalline ettringite and of calcium hydrosilicate phases occurs in the matched mixture after mixing with water, in association with the rapid setting, and the time-dependent hygroscopic stability curve of the hardened mixture has a positive gradient everywhere, which lies in the range between 0 and 1.6, within the first twenty-eight days.

2. A process according to claim 1, wherein the calcium sulphate alpha-hemihydrate and the foundry sand are milled jointly and thereby mixed.

3. A process according to one of claims 1 or 2, wherein a calcium sulphate alpha-hemihydrate is employed which was obtained from the desulphurisation gypsum of a wet-process flue gas desulphurisation installation, and contains chloride components.

4. A process according to any one of claims 1 to 3, wherein a foundry sand is used which has an Al₂O₃ content of at least 13 %, and in which foundry sand the (CaO + MgO + Al₂O₃)/SiO₂ ratio is at least 1.6.

5. A process according to any one of claims 1 to 4, wherein chloride components are admixed.

6. A process according to claim 5, wherein the chloride components are admixed in an amount from 0.2 to 3 weight %, based on the total amount.

7. A process according to any one of claims 1 to 6, wherein iron sulphate is admixed.

8. A process according to claim 7, wherein the iron sulphate is admixed in an amount from 0.2 to 3 weight %, based on the total amount.

9. A process according to any one of claims 1 to 8, wherein known accelerators based on alkali hydroxides, alkali carbonates, alkali sulphates (or mixtures thereof) are admixed.

10. A process according to any one of claims 1 to 9, wherein a known retarding agent, e.g. citric acid monohydrate, is admixed.

11. A process according to any one of claims 1 to 10, wherein the amount of foundry sand is selected so that the first derivative of the hygroscopic stability curve of the hardened mixture with respect to time lies in the range between 0 and 1.6 on the section of the curve following the formation of calcium sulphate dihydrate until the final strength is reached.

12. A process according to any one of claims 1 to 11, wherein the calcium sulphate alpha-hemihydrate and the foundry sand are milled at least to cement fineness.

13. A process according to claim 12, wherein the calcium sulphate alpha-hemihydrate and the foundry sand are milled to a Blaine specific surface of at least 3000.

14. A process according to any one of claims 1 to 13, wherein the calcium sulphate alpha-hemihydrate is added in an amount of 30 to 90 weight %, based on the total mixture.

15. A binder mixture which is produced according to one or more of claims 1 to 14.

## Revendications

1. Procédé pour fabriquer un liant hydraulique à prise rapide après gâchage à l'eau, la masse durcie formée à partir d'un tel liant présentant une inertie à l'eau définie, et incluant les étapes suivantes :
1) comme constituant à prise rapide, on utilise du sulfate de calcium semi-hydraté type alpha en une quantité de départ comprise entre 30 et 90 % de la masse du mélange total, et dont la masse durcissante possède une courbe d'inertie à l'eau, qui dépend du temps et qui, à partir d'une valeur de résistance initiale élevée lors de la prise rapide, possède une pente négative pendant les vingt-huit premiers jours,
2) on mélange du sable métallurgique au sulfate de calcium semi-hydraté type alpha sélectionné conformément à l'étape opératoire 1),
3) on règle la quantité de sable métallurgique sur la quantité de départ du sulfate de calcium semi-hydraté de type alpha de manière que dans le mélange réglé, après gâchage à l'eau, il se produise, à la suite de la prise rapide, la formation d'ettringite et de phases d'hydrosilicate de calcium, et que la courbe d'inertie à l'eau, qui dépend du temps, du mélange solidifié possède, pendant les vingt-huit premiers jours, partout une pente positive qui se situe dans la gamme de valeurs comprise entre 0 et 1,6.

2. Procédé selon la revendication 1, selon lequel on broie en commun et on mélange le sulfate de calcium semi-hydraté de type alpha et le sable métallurgique.

3. Procédé selon l'une des revendications 1 ou 2, selon lequel on travaille avec un sulfate de calcium semi-hydraté de type alpha, qui a été obtenu à partir du gypse de désulfuration d'une installation de désulfuration des gaz de fumée, qui travaille par voie humide, et comporte des constituants chlorurés.

4. Procédé selon l'une des revendications 1 à 3, selon lequel on travaille avec du sable métallurgique qui possède une teneur en Al₂O₃ égale au moins à 13 %, et dans lequel le rapport (CaO + MgO + Al₂O₃)/SiO₂ est égal au moins à 1,6.

5. Procédé selon l'une des revendications 1 à 4, selon lequel on ajoute en mélange des constituants chlorurés.

6. Procédé selon la revendication 5, selon lequel on ajoute en mélange les composants constituants chlorurés en une quantité comprise entre 0,2 et 3 % en masse, rapportés à la quantité totale.

7. Procédé selon l'une des revendications 1 à 6, selon lequel on ajoute en mélange du sulfate de fer.

8. Procédé selon la revendication 7, selon lequel on ajoute en mélange du sulfate de fer en une quantité comprise entre 0,2 et 3 % en masse, rapportés à la quantité totale.

9. Procédé selon l'une des revendications 1 à 8, selon lequel on ajoute en mélange des accélérateurs connus, à base d'hydroxydes alcalins, de carbonates alcalins, de sulfates alcalins (ou de mélanges de ces substances).

10. Procédé selon l'une des revendications 1 à 9, selon lequel on ajoute en mélange un agent de retardement connu, par exemple du monohydrate de l'acide citrique.

11. Procédé selon l'une des revendications 1 à 10, selon lequel on choisit la quantité de sable métallurgique de manière que la dérivée première de la courbe d'inertie à l'eau du mélange durci par rapport au temps, dans la section de courbe qui se raccorde à la formation de sulfate de calcium dihydraté et jusqu'à l'obtention de la résistance finale, se situe dans la gamme de valeurs comprises entre 0 et 1,6.

12. Procédé suivant l'une des revendications 1 à 11, selon lequel on broie le sulfate de calcium semi-hydraté de type alpha et le sable métallurgique pour obtenir au moins la finesse du ciment.

13. Procédé selon la revendication 12, selon lequel on broie le sulfate de calcium semi-hydraté de type alpha et le sable métallurgique de manière à obtenir une surface spécifique selon Blaine égale à au moins 3000.

14. Procédé selon l'une des revendications 1 à 13, selon lequel on utilise le sulfate de calcium semi-hydraté de type alpha en une quantité comprise entre 30 et 90 pour cent en masse, rapportés au mélange total.

15. Mélange formant liant, qui a été fabriqué selon une ou plusieurs des revendications de procédé 1 à 14.
